# EUROPÄISCHE PATENTSCHRIFT

(11) **EP 0 361 556 B1**
(45) Veröffentlichungstag und Bekanntmachung des Hinweises auf die Patenterteilung: **18.05.1994**
(21) Anmeldenummer: 89202103.1
(22) Anmeldetag: 17.08.1989
(51) Int. Cl.: A62D 3/00, B01D 53/34

(54) **Verfahren zur Aufbereitung von Rückständen aus der Abgasreinigung**
Process for the treatment of residues from waste gas purification
Procédé pour traiter les résidus de l'épuration des gaz d'échappement

(30) Priorität: 13.09.1988 DE 3831128
(43) Veröffentlichungstag der Anmeldung: 04.04.1990
(73) Patentinhaber: METALLGESELLSCHAFT AG, 60015 Frankfurt (DE)
(72) Erfinder: Sauer, Harald, Dr., D-6000 Frankfurt am Main 50 (DE); Thöne, Bernd, D-6360 Friedberg (DE)

(56) Entgegenhaltungen:
- DE-C- 882 698
- JP-A-54 111 460
- PATENT ABSTRACTS OF JAPAN, Band 5, Nr. 136 (C-69)[808], 28. August 1981;& JP-A-56 70 821
- DERWENT JAPANESE PATENTS GAZETTE, Section Chemical, C03, Woche B41,Zusammenfassung Nr. 74240B/41, 21. November 1979, Derwent Publications Ltd,London, GB; & JP-A-54 111 460
- CHEMICAL ABSTRACTS, Band 93, Nr. 6, 11. August 1980, Seite 418, ZusammenfassungNr. 53277x, Columbus, Ohio, US; & JP-A-80 20 651
- Landesamt für Wasser und Abfall Nordrhein-Westfalen: Entwurf einer Richtlinie über die Untersuchung und Beurteilung von Abfällen - Düsseldorf, Juni 1987

## Beschreibung

Die Erfindung bezieht sich auf ein Verfahren zur Aufbereitung der bei Kraftwerksanlagen oder dergleichen aus der Abgasreinigung trocken, staubförmig anfallenden Rückstände, die u.a. 5 bis 12 Gew.% CaO enthalten und eine Leitfähigkeit größer als 6000 µ S/cm aufweisen.

Derartige Rückstände sind wegen des relativ hohen CaO-Gehalts zur Endlagerung in Deponien der Klasse 2 nicht geeignet und es entstehen daher zusätzliche Deponiekosten, die derzeit etwa DM 40,-- pro Tonne betragen. Der Erfindung liegt die Aufgabe zugrunde, das in den Rückständen enthaltene freie CaO soweit umzuwandeln, daß die Rückstände für Deponien der Klasse 2 zugelassen werden können. Dabei wird angestrebt, daß mit der Umwandlung deutliche wirtschaftliche Vorteile gegenüber den bisher erforderlichen zusätzlichen Deponiekosten erreicht werden.

Herkömmliche Verfahren zur Aufbereitung der aus der Abgasreinigung trocken, staubförmig anfallenden Rückstände sind bekannt. So beschreibt die Schrift PATENT ABSTRACTS OF JAPAN, Band 5, Nr. 136 (C-69) [808], & JP-A-5670821, ein Verfahren zur Behandlung von CaO-haltigen Rückständen, das auf das Deponieren der Rückstände in der unmittelbaren Nähe von Küstengebieten bezogen ist. In dieser Schrift wird ausführlich darauf hingewiesen, daß das Deponieren von CaO-haltigen Rückständen in Küstennähe ein besonderes Problem darstellt, da das CaO mit Regenwasser zu Ca(OH)₂ reagiert, das anschließend in das angrenzende Gewässer gelangt und dort den pH-Wert und die Trübung des Gewässers nachteilig beeinflußt. Das Problem beim Deponieren CaO-haltiger Rückstände gemäß der Deponieklasse 2, das nicht auf Deponien in der Nähe einer Küstenregion beschränkt ist, wird in dieser Schrift nicht angesprochen.

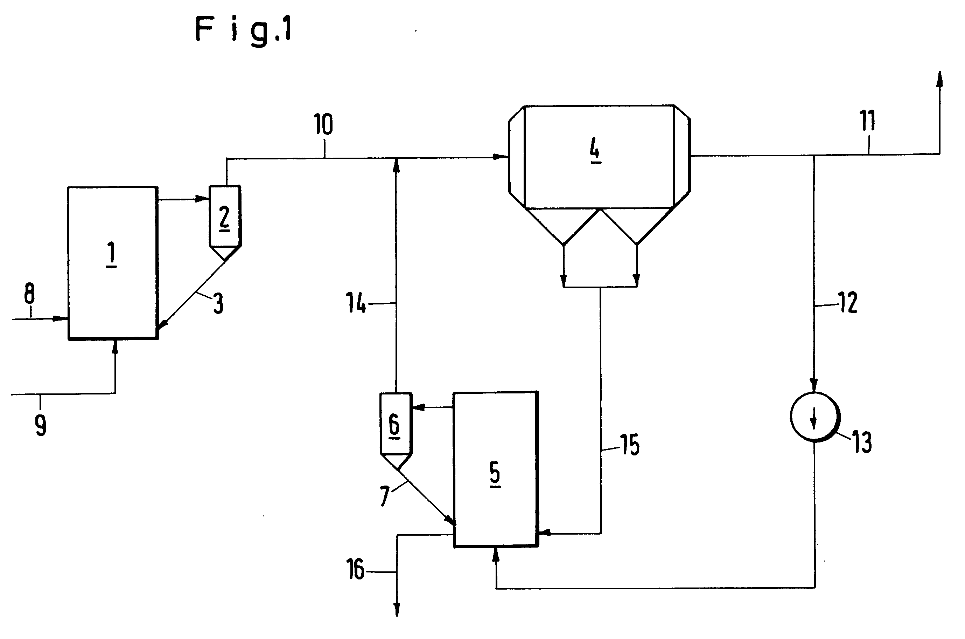

Ferner wird in der Schrift DERWENT JAPANESE PATENTS GAZETTE, Section Chemical, C03, Woche B41, Zusammenfassung Nr. 74240B/41, 21, & JP-A-54111460, ein Verfahren zur Behandlung von CaO-Pulver beschrieben, bei dem es vorgesehen ist, das CaO-Pulver in einer Wirbelschicht mit einer Flüssigkeit zu besprühen, die u.a. Wasser und ein Bindemittel enthält. Auf diese Weise wird die Oberfläche der einzelnen CaO-Teilchen in CaCO₃ überführt. Daß bei diesem Verfahren eine klassische Wirbelschicht eingesetzt werden soll, wird u.a. aus der Fig. 1 deutlich. Aussagen über Verfahrensparameter, die bei der Behandlung CaO-haltiger Rückstände erforderlich sind, um ein Deponieren gemäß der Deponieklasse 2 zu realisieren, lassen sich auch aus dieser zweiten Schrift nicht entnehmen.

Zur Lösung der oben geschilderten Aufgabe wird vorgeschlagen, die Rückstände in einer aus Wirbelschichtreaktor, Abscheider und Rückführleitung bestehenden zirkulierenden Wirbelschicht mit gereinigtem Abgas zu verwirbeln und dabei den CaO-Anteil der Rückstände mit dem CO₂ der Abgase zu CaCO₃ umzusetzen und so weit zu senken, daß deren Leitfähigkeit weniger als 2500 µ S/cm beträgt.

Das entstandene Calciumcarbonat ist in Wasser nicht löslich und beeinträchtigt daher nicht mehr die Deponiefähigkeit der Rückstände. Die Aufbereitung der Rückstände erfolgt zweckmäßigerweise bei 180 bis 450°C mit einem Teilstrom der gereinigten Abgase von etwa 10 % der gesamten Abgasmenge. Günstig ist es, wenn der Teilstrom in Abhängigkeit vom CaO-Gehalt der Rückstände derartig bemessen wird, daß stets mindestens die zweifache Menge an CO₂ - bezogen auf die stöchiometrisch für die Umsetzung zu CaCO₃ benötige Menge - zur Verfügung steht.

Zur Regelung der Temperatur in der zirkulierenden Wirbelschicht kann eine Wassereindüsung vorgesehen werden.

Weitere Einzelheiten des Erfindungsgedankens werden anhand des in Fig. 1 dargestellten Verfahrensbeispiels näher erläutert.

Dargestellt ist eine Abgas-Entschwefelungseinrichtung mit Wirbelschicht-Reaktor (1), Abscheider (2) und Rückführleitung (3), in der ein über die Leitung (9) zugeführter Abgasstrom mit einem über die Leitung (8) zugeführten kalkhaltigen, pulverförmigen Sorptionsmittel intensiv vermischt wird, wobei die gasförmigen, schwefelhaltigen Schadstoffe an die Feststoffpartikel gebunden werden. Letztere werden zur besseren Ausnutzung und zur Erhöhung des Feststoffanteils im Wirbelschichtreaktor (1) über den Abscheider (2) und die Rückführleitung (3) im Kreislauf geführt. Ein der Zugabe über die Leitung (8) entsprechender Anteil wird mit dem Abgas über die Leitung (10) aus der Entschwefelungseinrichtung abgeführt und in einem elektrostatischen Gasentstauber (4) vom Abgasstrom abgetrennt. Dabei fällt in der Leitung (15) eine aus Staub, reagiertem und unreagiertem Sorptionsmittel bestehende Mischung an, die u.a. noch 5 bis 12 Gew.% CaO enthält und deswegen einer kostspieligen Sonderdeponie zugeführt werden muß. Über die Leitung (11) verläßt der entschwefelte und entstaubte Abgasstrom die Anlage.

Erfindungsgemäß wird das im elektrostatischen Gasentstauber (4) anfallende Gemisch über die Leitung (15) einer Nachbehandlung zugeführt, wozu eine aus Wirbelschichtreaktor (5), Abscheider (6) und Rückführleitung (7) bestehende zirkulierende Wirbelschicht benutzt wird. Als Fluidisierungsgas dient ein Teil des gereinigten Abgases, das mittels Gebläse (13) über die Leitung (12) in den Wirbelschichtreaktor (5) eingebracht wird. Wie schon bei der zirkulierenden Wirbelschicht für die Entschwefelung werden die Feststoffpartikel im Kreislauf geführt, um die angestrebte Reaktion des CaO mit dem CO₂ des Abgases zu CaCO₃ zu verbessern und den Gas-Feststoff-Kontakt zu intensivieren. Über die Leitung (16) wird dann ein im wesentlichen CaO-freier Rückstand aus dem System entnommen, während der Abgas-Teilstrom über die Leitung (14) in den Hauptabgasstrom zurückgeführt wird. Die Nachbehandlung erfolgt bei 180 bis 450°C, wobei eine Regelung der Temperatur durch Eindüsen von Wasser in den Wirbelschichtreaktor (5) erfolgen kann. Der Abgas-Teilstrom beträgt etwa 10 % der gesamten Abgasmenge. Er wird in jedem Fall so bemessen, daß stets etwa doppelt soviel CaO "angeboten" wird wie zur stöchiometrischen Umsetzung des CaO erforderlich ist.

## Patentansprüche

1. Verfahren zur Aufbereitung der bei Kraftwerksanlagen oder dergleichen aus der Abgasreinigung trocken, staubförmig anfallenden Rückstände, die u.a. 5 bis 12 Gew.% CaO enthalten und eine Leitfähigkeit größer als 6000 µ S/cm aufweisen, dadurch gekennzeichnet, daß die Rückstände in einer aus Wirbelschichtreaktor, Abscheider und Rückführleitung bestehenden zirkulierenden Wirbelschicht mit gereinigtem Abgas verwirbelt werden, wobei der CaO-Anteil der Rückstände mit dem CO₂ der Abgase zu CaCO₃ umgesetzt und so weit gesenkt wird, daß deren Leitfähigkeit weniger als 2500 µ S/cm beträgt.

2. Verfahren nach Anspruch 1, dadurch gekennzeichnet, daß die Rückstände bei einer Temperatur von 180 bis 450°C aufbereitet werden.

3. Verfahren nach einem der Ansprüche 1 oder 2, dadurch gekennzeichnet, daß zur Aufbereitung ein Teilstrom der gereinigten Abgase von etwa 10 % der gesamten Abgasmenge verwendet wird.

4. Verfahren nach Anspruch 3, dadurch gekennzeichnet, daß der Teilstrom in Abhängigkeit von dem CaO-Gehalt der Rückstände derartig bemessen wird, daß stets mindestens die 2-fache Menge an CO₂ - bezogen auf die stöchiometrisch für die Umsetzung zu CaCO₃ benötigte Menge - zur Verfügung steht.

5. Verfahren nach einem der Ansprüche 1 bis 4, dadurch gekennzeichnet, daß zur Regelung der Temperatur in der zirkulierenden Wirbelschicht eine Wassereindüsung vorgesehen ist.

## Claims

1. A method for treating the dry residues produced in dust form from the purification of exhaust gas in power stations or the like, which residues contain, inter alia, 5 to 12% by weight CaO and have a conductivity of more than 6,000 µS/cm, characterised in that the residues are fluidised with purified exhaust gas in a circulating fluidised bed system consisting of a fluidised bed reactor, separator and recycling line, with the CaO content of the residues being reacted with the CO₂ of the exhaust gazes to form CaCO₃ and being reduced to such an extent that the conductivity thereof is less than 2,500 µS/cm.

2. A method according to Claim 1, characterised in that the residues are treated at a temperature of 180 to 450°C.

3. A method according to one of Claims 1 or 2, characterised in that a partial stream of the purified exhaust gases of about 10% of the total quantity of exhaust gas is used for treatment.

4. A method according to Claim 3, characterised in that the partial stream is calculated in dependence on the CaO content of the residues such that there is always at least twice the amount of CO₂ available, relative to the amount stoichiometrically required for the reaction to CaCO₃.

5. A method according to one of Claims 1 to 4, characterised in that provision is made for water to be injected to control the temperature in the circulating fluidised bed system.

## Revendications

1. Procédé de traitement des résidus secs, se produisant sous forme de poussières dans l'épuration des effluents gazeux d'installations nucléaires ou analogues, contenant entre autres de 5 à 12 % en poids de CaO et ayant une conductivité supérieure à 6000 µs/cm, caractérisé en ce qu'il consiste à mettre les résidus en tourbillonnement avec de l'effluent gazeux épuré dans un lit fluidisé circulant constitué d'un réacteur à lit fluidisé, d'un séparateur et d'un conduit de recyclage, la proportion de CaO des résidus étant transformée en CaCO₃ par le CO₂ des effluents gazeux et étant abaissée au point que sa conductivité soit inférieure à 2500 µs/cm.

2. Procédé suivant la revendication 1, caractérisé en ce qu'il consiste à traiter les résidus à une température de 180 à 450°C.

3. Procédé suivant l'une des revendications 1 ou 2, caractérisé en ce qu'il consiste à utiliser pour le traitement un courant partiel des effluents gazeux épurés représentant 10 % environ de la quantité totale d'effluents gazeux.

4. Procédé suivant la revendication 3, caractérisé en ce qu'il consiste à proportionner le courant partiel en fonction de la teneur en CaO des résidus, de manière à disposer toujours d'au moins deux fois la quantité de CO₂ rapportée à la quantité nécessaire stoéchiométriquement pour la transformation en CaCO₃.

5. Procédé suivant l'une des revendications 1 à 4, caractérisé en ce qu'il consiste à prévoir une projection d'eau pour régler la température dans le lit fluidisé circulant.
